# EUROPEAN PATENT APPLICATION

(11) **EP 4 818 985 A1**
(43) Date of publication of application: **07.10.2026**
(21) Application number: 25167501.3
(22) Date of filing: 31.03.2025
(51) Int. Cl.: G06N 5/01, G06N 20/20, G06Q 30/02, G06Q 40/06, G06Q 50/18, G06N 20/10

(54) **COMPUTER-IMPLEMENTED METHOD AND SYSTEM FOR STRUCTURING AND VALUATING DATA ASSOCIATED WITH NON-FUNGIBLE ASSETS**

(71) Applicant: Mangohammock Limited, London EC3V 3NG (GB)
(72) Inventor: Huber, Johann, London, EC3V 3NG (GB); Kleiman, Jonathan, London, EC3V 3NG (GB)
(74) Representative: Basck Limited

(57) **Abstract**

Disclosed is a computer-implemented method for an automated valuation of non-fungible asset is performed by computing node(s) (202), communicably coupled to user device(s) (208) and data repository(s) (204), wherein the computing nodes, the data repository and the user device are connected via a computing network, comprises: receiving input data comprises at least one parameter that is a unique identifier of the non-fungible asset; capturing published data, wherein the published data comprises a second set of parameters; preprocessing the captured data for normalization of the published data to generate an output data that is structured; executing a pre-trained valuation model (212) to identify a proxy for parameters that are missing from the captured data; and applying a predictive machine learning model by executing a predictive valuation model (214) to generate valuation result for the non-fungible asset with a pre-set accuracy and display the valuation result at a screen.

## Description

### TECHNICAL FIELD

The present disclosure relates to computer-implemented method for structuring unstructured data associated with non-fungible assets. Moreover, the present disclosure relates to systems for structuring unstructured data associated with non-fungible assets. Furthermore, the computer-implemented methods and systems for automated valuation of patents as non-fungible assets.

### BACKGROUND

Generally, a valuation of patents plays a critical role in various intellectual property (IP) and business-related activities, including mergers and acquisitions (M&A), patent licensing, litigation risk assessment, and corporate IP strategy. An accurate assessment of patent value is essential for investors, legal professionals, and technology companies to make informed financial and strategic decisions. However, determining the value of a patent is inherently complex due to the involvement of numerous factors, such as legal status, litigation history, citation networks, renewal data, and semantic content of patent claims. Traditional valuation approaches often require expert analysis, which is not only time-consuming and expensive but also prone to subjectivity and inconsistency. As the volume of patent filings and legal proceedings continues to rise globally, there is an increasing demand for automated and data-driven solutions that can provide more efficient, scalable, and accurate patent valuation methodologies.

Existing solutions for the patent valuation include manual expert assessments and AI-driven analytics platforms. Manual methods, often employed by valuation firms and law firms, provide in-depth analysis but the aforementioned methods are time-consuming, costly, and prone to subjectivity and inconsistencies. On the other hand, AI-driven platforms leverage machine learning and natural language processing automate certain aspects of patent analysis. However, these platforms exhibit significant limitations. Many AI-driven platforms fail to dynamically identify key valuation factors, such as litigation history, renewal data and the like especially when some of these traditional parameters are unavailable. For example, the traditional parameters such as grant lag, renewal fee payment status, prediction, average claim word count, and citation counts are often critical for valuation but may not always be accessible due to incomplete datasets or jurisdictional differences. Additionally, the existing solutions rely on outdated or fixed criteria, which do not generalize well across diverse patent portfolios, leading to overfitting and reduced accuracy. Additionally, most existing solutions lack real-time adaptability, resulting in inefficiencies and delays in the valuation process. Moreover, the existing solutions often fails to address overfitting and underfitting issues, which results in reduced accuracy and generalization.

Therefore, in light of the foregoing discussion, there exists a need to overcome the aforementioned drawbacks.

### SUMMARY

The aim of the present disclosure is to provide an automated, computer-implemented method and a system to automate and enhance real-time mathematical calculations performed from publicly available data, when computing node(s) and/or a data repository are required to be connected over data communication network. In the present invention, while the accuracy of the results are improved over non automated methods, according to embodiments of the present invention the computing device performing the calculations will perform faster than when currently available methods calculations. Furthermore, the invention, via the development of pre-trained model (e.g. artificial intelligence predictive model) allows for the calculations to be performed even when originally required parameters are not available, which is a situation in which methods implemented by automated computer systems of the prior art will not arrive at the required results. Critically, when such calculations are performed to, for example, arrive at a valuation of a non-fungible asset, the for the results to be verified by third parties without disclosing the details of the asset valued.

In the context of the calculations mentioned above being performed for the valuation of non-fungible assets improving accuracy through integration of legal and financial data (such as, litigation, legal status, annuity payment and the like), and by preventing data overfitting and/or underfitting are effects of the present invention. The invention addresses the problems of data overfitting and underfitting issues by using ensemble learning algorithms. When the non-fungible asset is a patent, the automated method of the present invention is performed with accuracy over 84% for Europe patents and 94% for US patents, even when some of traditional parameters are unavailable. Therefore, an aim of the present disclosure may be achieved by a method and a system for an automated valuation of a non-fungible asset as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is an illustration of a flow chart of steps of a method for an automated valuation of a non-fungible asset, in accordance with an embodiment of the present disclosure;
FIG. 2 is an illustration of a block diagram of a system for an automated valuation of a non-fungible asset, in accordance with an embodiment of the present disclosure;
FIG. 3A is an illustration of a graphical representation of an AUC-ROC curve (Area Under the Receiver Operating Characteristic Curve) for an iterative predictive machine learning model, in accordance with an embodiment of the present disclosure;
FIG. 3B is an illustration of a graphical representation of an AUC-ROC curve (Area Under the Receiver Operating Characteristic Curve) for a Gradient Boosting Machine (GBM) model with untrained data, in accordance with an embodiment of the present disclosure;
FIG. 3C is an illustration of a confusion matrix, in accordance with an embodiment of the present disclosure; and
FIG. 3D is an illustration of a horizontal bar chart representing relative importance of various features in a predictive machine learning model, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a computer-implemented method for an automated valuation of a non-fungible asset as defined in the appended claims.

The present disclosure provides the aforementioned method that is capable of identifying a proxy for the at least one missing value and from the combination of parameters derived from the published data, convert unstructured data into a structured format. The present invention addresses the technical problem of preventing an artificial intelligence (AI) system from overtraining or undertraining a model, as well as avoiding issues of overfitting or underfitting. At the same time, the system ensures that a valuation result is generated at a pre-set level of confidence, even in the presence of one or more missing parameters. The system achieves this by executing a pre-trained valuation model to identify proxies for missing parameters and by applying a predictive valuation model that can operate effectively with incomplete data. This ensures that the system maintains its operation and provides a reliable valuation result without requiring the harvesting of all parameters associated with the non-fungible asset. Unlike other systems that may halt or fail in the absence of complete data, the disclosed algorithm solves this problem by dynamically adapting to the available data and ensuring the continuity of the valuation process. The method continuously captures and processes published data from the data repository, ensuring that the valuation process remains dynamic and up to date. By incorporating the pre-trained valuation model, the method ensures that the proxy is derived with the pre-set confidence value, enabling the predictive machine learning model to learn effectively even with incomplete data. This approach prevents underfitting by enabling the predictive machine learning model to learn effectively even with incomplete data and ensures that the predictive machine learning model is able to identify relationships between features and target variable, improving its ability to generalize the missing parameters and enhancing the overall accuracy of the valuation process. Without preprocessing, the published data may contain noise, redundancies, or missing information, which can negatively impact the accuracy and reliability of the automated valuation process. In this regard, the preprocessing encompasses a series of operations, including cleaning, organizing, and transforming the published data with normalization being a key objective. The preprocessing of the published data transforms the unstructured data into a structured output, making it suitable for use in machine learning models. This step ensures consistency, reduces variability, prevents undercutting and minimizes computational complexity, which could otherwise negatively impact model accuracy. By using the at least one multi-dimensional vector-based model during preprocessing, the method ensures that the structured output data is optimized for downstream machine learning tasks, further enhancing the reliability of the valuation process. By leveraging ensemble learning algorithms, the method enhances predictive accuracy by aggregating insights from multiple models, thereby reducing errors and improving robustness. Additionally, the extraction of the at least one parameter ensures that only meaningful and influential factors are considered, while irrelevant parameters is eliminated, resulting in a more precise and efficient valuation process. The use of a proxy derived from a combination of parameters or a single parameter that ensures that the valuation process is carried out automatically even pieces of data are missing from the captured data.

The method also eliminates the need for manual valuation efforts by automating data capture, preprocessing, and modeling, significantly reducing the time and effort required for valuation. Furthermore, the computer- implemented method is scalable as compared to existing valuation methods for the non-fungible assets, enabling it to process and analyze data from multiple sources in real time, making it suitable for large patent portfolios or high-volume applications. The integration of a computing network that connects the computing nodes, the data repository, and the user device ensures seamless communication and efficient data processing. By incorporating the application of hashing to an input data and/or a valuation result data, the computer-implemented method ensures that any changes or updates to the dynamically updated parameters (e.g., patent records) can be detected efficiently by comparing the hash of the current input data with a previously stored hash value. This eliminates the need to re-read or reprocess the entire dataset, significantly reducing computational overhead and saving processing time. Similarly, the application of hashing to the valuation result ensures that the preprocessed data remains consistent and free from errors.

In a second aspect, the present disclosure provides a system for an automated valuation of a non-fungible asset, as defined in the appended claims.

The present disclosure provides the aforementioned system for the automated valuation of non-fungible assets, which identifies the proxy for the at least one missing parameter and leverages the combination of parameters derived from the captured data to covert unstructured data into a structured output data and reduces a computational load on the processor communicably coupled to the data repository. The system employs the computational power and connectivity of the processor to efficiently access, process and analyses the data stored in the data repository. The data repository stores published data in a structured format, ensuring that the system has access to well-organized and readily available information for further processing. The preprocessing module leverages advanced data transformation techniques such as Mean/Median/Mode imputation, K-Nearest Neighbors (KNN) imputation, Regression-based imputation, Deep learning methods like autoencoders and the like, transforms the captured published data into a structured format to ensure consistency, reduce variability, and minimize computational complexity, which could otherwise negatively impact the accuracy of the machine learning model. By normalizing the published data and using at least one multi-dimensional vector-based model, the preprocessing module ensures that the structured output data is optimized for downstream machine learning tasks. By leveraging the feature engineering module, the system ensures that only meaningful and influential factors are considered while irrelevant data is eliminated. This results in a more precise and efficient valuation process. The machine learning module employs ensemble learning algorithms to develop a predictive valuation model, enhancing predictive accuracy by aggregating insights from multiple models. This approach reduces errors, improves robustness, and ensures that the system can handle complex, non-linear relationships between patent features and their value. The performance evaluation module further ensures the reliability of the system by using performance metrics to evaluate the model's accuracy. This allows for detailed analysis and fine-tuning of the model to optimize trade-offs between false positives and false negatives, making the system highly reliable for decision-making.

Additionally, the system eliminates the need for manual valuation processes by automating data capture, preprocessing, feature extraction, and modelling, significantly reducing the time and effort required for valuation. Unlike traditional systems that rely on complete datasets and predefined mathematical formulas to calculate accuracy or compare methods, the system introduces advanced techniques to handle incomplete or missing data, ensuring robust and reliable valuations even in the absence of certain data points. The system improves upon conventional methods by dynamically adapting to evolving legal and financial data, employing machine learning algorithms (such as Gradient Boosting Machines (GBM), deep learning models (such as recurrent neural networks (RNNs), graph neural networks (GNNs)) to identify patterns and relationships that would otherwise require extensive manual analysis. This adaptability ensures that the system remains effective in dynamic environments, where data inputs and valuation criteria are subject to frequent changes. Furthermore, the system's scalability with the large datasets allows it to process large datasets efficiently by reducing the computational operations, making it suitable for real-time applications and large-scale patent portfolios. The system also incorporates the application of hashing to the input data and/or the valuation result data to ensure that any changes or updates to the dynamically updated parameters (e.g., patent records) can be detected efficiently by comparing the hash of the current input data with a previously stored hash value. This eliminates the need to re-read or reprocess the entire dataset, significantly reducing computational overhead and saving processing time.

Throughout the present disclosure, the term *"non-fungible asset"* refers to a unique and an indivisible asset that holds value and cannot be exchanged on a one-to-one basis with another asset of the same type. The non-fungible asset is characterized by its distinct attributes, which differentiate it from other assets, making it irreplaceable. For example, the non-fungible asset may include, but are not limited to, intellectual property assets (for example, patents, trademarks, copyrights, trade secrets, designs, and the like), cryptographic assets (non-fungible tokens (NFTs) and the like), financial instruments (for example, digital securities, tokenized stocks and the like), software licenses, art, and the like.

Throughout the present disclosure, the term *"automated valuation"* refers to a systematic and a computational process for determining a monetary value of the non-fungible asset using data-driven techniques without requiring manual intervention. The automated valuation is performed through algorithmic analysis of a structured and an unstructured data, leveraging the predictive machine learning modeling, and the like to generate an objective and scalable estimation of the non-fungible asset's worth. The valuation refers to a process of determining the estimated financial worth or market value of a non-fungible asset, expressed in a specific currency or monetary unit. It will be appreciated that by integrating options-based pricing models such as Black-Scholes model, which accounts for underlying market volatility of a patent's technological domain. Moreover, quantitative value-features encapsulate a patent's worth, including grant lag, generality index reflecting broad applicability of the patent, a quality index comprising claim breadth, litigation history, revisions and the like.

The at least one computing nodes include a computing arrangement that are operable to respond to, and process instructions and data related to the non-fungible asset therein. The computing arrangements may include, but are not limited to, a microprocessor, a microcontroller, a 15 complex instruction set computing (CISC) microprocessor, a reduced instruction set (RISC) microprocessor, a very long instruction word (VLIW) microprocessor, an artificial intelligence (AI) computing engine based on hierarchical networks of variable-state machines, or any other type of processing circuit. Furthermore, the computing arrangements 20 can be one or more individual processors, processing devices and various elements associated with a processing device that may be shared by other processing devices. Additionally, the computing arrangements are arranged in various architectures for responding to and processing the instructions that drive the automated valuation process. Moreover, the at least one computing node is communicably coupled to each other via the data communication network that allows for communication among said plurality of computing nodes. Optionally, for an example, in an extreme situation, a self-developed or downloaded large language model (LLM) can be hosted on the same device as the computing node. However, in practice, the system requires at least four distinct computing nodes or devices to perform the automated valuation of the non-fungible asset effectively. The devices may include a host device of the model, which is a computing node configured to train and host the predictive valuation model. This node is responsible for executing the machine learning models, including the pre-trained valuation model and the predictive valuation model, to process the input data and generate the valuation result.

Throughout the present disclosure, the term *"user device"* as used herein refers to a separate electronic device that a given user interacts with provide the input data associated with the non-fungible asset and receives the valuation result. Examples of the user device may include, but are not limited to, a smartphone, a tablet, a laptop, or a desktop computer. The user device act as an interface for the given user to engage with the valuation system. It will be appreciated that the user device is distinct from the other devices, or the computing nodes present in the system. Additionally, the LLM host is a device configured to host a large language model (LLM). The LLM may be used to process unstructured data, extract semantic features, or assist in generating vector embeddings for the captured data. The computing node acts as the central processing unit, interacting with the user device, the LLM host, and the data repository to perform the automated valuation process.

Throughout the present disclosure the term *"input data"* refers to the data transmitted from the user device to the at least one computing node that is associated with the non-fungible asset. The input data serves as the initial information required to identify and analyze the non-fungible asset. The input data comprises at least one parameter that provides specific details about the non-fungible asset. The term *"parameter"* refers to a specific attribute or characteristic of the non-fungible asset such as domain name, serial number and the like, that is included in the input data. The at least one parameter provides detailed information about the non-fungible asset and is used by the system to uniquely identify and analyze the asset. The term *"unique identifier"* refers to a specific type of parameter included in the input data that uniquely distinguishes the non-fungible asset from other assets. The unique identifier ensures that the system can accurately recognize and analyze the non-fungible asset during the valuation process. Examples of the at least one parameter may include a patent number, a digital asset ID, or the like that is specific to the non-fungible asset. For example, for a digital artwork or NFT, the unique blockchain-based identifier (such as, "0x123abc456def...") serves as the parameter that distinguishes the asset from others. It enables the system to initiate the automated valuation process by uniquely identifying the non-fungible asset. The unique identifier ensures that the system processes the correct asset and retrieves relevant data from the data repository. The unique identifier is used to retrieve additional information about the asset from the data repository. The communication network ensures seamless transmission of the input data from the user device to the computing node. It will be appreciated that by using a unique identifier as part of the input data, the system eliminates ambiguity and ensures that the correct asset is processed. This step also enables the system to handle large datasets and multiple assets simultaneously, as each asset is uniquely identified.

Throughout the present disclosure, the term *"published data"* refers to a publicly available or disclosed information that has been officially released through various authoritative sources. Notably, the published data may include legal documents, financial reports, patent filings, regulatory disclosures, research publications, any structured and unstructured content, and the like that is relevant for the valuation purpose. The published data serves as an input for the automated valuation process.

Optionally, the published data comprises at least one of: patent claims, legal status data, renewal data, citation reports, metadata associated with the non-fungible asset. In this regard, the term *"patent claims"* refers to specific legal statements within a patent document that define the scope of protection granted to an invention. The patent claims are related to the non-fungible asset, as the non-fungible asset may represent intellectual property whose value is influenced by the scope and strength of the patent claims. The term *"legal status data"* refers to an information about a current legal standing or a procedural state of the non-fungible asset or the intellectual property. The legal status data is included as a type of the published data that is captured from the data repository. The legal status data provides critical insights into whether the non-fungible asset is active, expired, pending, or under litigation, which directly impacts the valuation of the non-fungible asset. The term *"renewal data"* refers to an information about payment of maintenance fees or renewal fees required to keep the non-fungible asset in force. The term *"citation reports"* refers to documents or datasets that list references to prior publications related to the non-fungible asset (for example, a patent) cited during the examination of an application of the non-fungible asset. The citation reports indicate novelty and nonobviousness of the non-fungible asset. The citation reports provide information about technological relevance and influence of the digital asset, which are critical factors in the valuation of the non-fungible asset. The term *"metadata"* refers to a descriptive, structural, and administrative information associated with the non-fungible asset (NFA), which provides context, characteristics, and provenance of the digital asset. The metadata may include details such as the title, creator/owner, date of creation or issue, unique identifiers (e.g., token ID or patent number), asset category, related documentation, associated rights or licenses, and transactional history. Moreover, incorporating the metadata into the published data allows the valuation system to capture additional semantic signals and historical attributes of the non-fungible asset, which can influence perceived or real market value. For example, metadata indicating frequent ownership transfers or extensive usage rights could correlate with higher asset value. A technical effect of the aforementioned feature is an ability to incorporate diverse types of the published data into the automated valuation process. It improves the automated valuation of the non-fungible asset, enabling more informed decision-making regarding intellectual property management and investment.

Throughout the present disclosure, the term *"data repository"* refers to a structured storage system or database that is configured to store the published data in the structured or the unstructured format. The data repository is a source from which the published data is captured for further processing. The data repository may be a centralized or a distributed system, such as patent databases, financial record archives, legal document repositories, blockchain networks, or other cloud-based data storage platforms. The data repository ensures data integrity, accessibility, and retrievability for automated valuation processes. In this regard, capturing the published data refers to a process of receiving or retrieving the published data from the data repository. The capturing of the published data from the data repository is essential because the published data provides raw information that is required to analyze and determine the value of the non-fungible asset. It will be appreciated that the data repository stores the published data that is retrieved from the official registries. The capturing process may involve querying the data repository using specific parameters or APIs to extract a required published data. In an embodiment, the data repository stores data from a Stanford Non Practicing Entity (NPE) litigation database. Herein, the NPE refers to entities or individuals that own patents but do not manufacture products or provide services based on the patents. Instead, NPEs primarily focus on enforcing patent rights through licensing or litigation. The NPEs are referred to patent trolls. The NPEs exploit patent rights by filing lawsuits or demanding licensing fees from companies that allegedly infringe on their patents, often without an intention of developing or commercializing the patented technology.

Throughout the present disclosure, the phrase *"second set of parameters"* refers to additional attributes or characteristics of the non-fungible asset that are included in the published data captured from the data repository. For example, in the case of a patent, the second set of parameters may include, but are not limited to patent claims, legal status data, market data, claim word count, summary length, days published to issue and the like. Moreover, the data repository acts as a centralized source of information, storing the second set of parameters associated with the non-fungible asset. The relevant published data is retrieved from the data repository based on the unique identifier of the non-fungible asset provided in the input data. By capturing the published data from the data repository, the system ensures that it has access to supplementary information that complements the input data. This approach reduces the risk of errors and inaccuracies caused by incomplete or insufficient data.

Throughout the present disclosure, the term *"normalization"* refers to a process of standardizing and structuring the published data into a format that eliminates inconsistencies, such as variations in data representation, a redundant information, or missing values. The normalization of the published data ensures that the published data is in a clean and structured state. The term *"multi-dimensional vector-based model"* refers to a computational model that represents the captured data in a multi-dimensional vector space, where each dimension corresponds to a specific feature or parameter of the captured data. For example, the multi-dimensional vector-based model may include Word2Vec, autoencoders, Latent Semantic analysis (LSA), graph embedding models and the like. The at least one multi-dimensional vector-based model is used during preprocessing to normalize the captured published data and transform it into a structured output data. The term *"output data"* refers to a structured data that is generated as a result of the preprocessing the captured published data using the at least one multi-dimensional vector-based model. The output data is normalized and transformed into a structured format that is suitable for use in machine learning models. The preprocessing refers to a set of operations performed on the published data to prepare the captured data for analysis. The preprocessing includes normalization of the captured data. The preprocessing ensures that the captured data is in a consistent and structured format, enabling the extraction of the one or more parameters. The natural language processing is used as a technique during the preprocessing of the published data to analyze and transform the published data. The at least one natural language processing technique, such as tokenization, stemming, lemmatization, and vector embedding generation, are applied to extract meaningful patterns and features from the published data.

Optionally, the step of preprocessing the captured data comprises at least one of: normalizing a numerical data, converting an unstructured data into a structured data, generating vector embeddings for the captured data using a pre-trained language model, in the captured data.

In this regard, the term *"numerical data"* refers to data that is represented in a numerical format, such as integers, decimals, or other quantitative values. The numerical data is often present in the published data, such as patent claims, legal status data, renewal data, or citation reports. The numerical data is essential for performing mathematical or statistical operations during the preprocessing stage of the published data. Moreover, normalizing the numerical data means transforming the numerical data into a standardized range or scale, such as between 0 and 1, to ensure uniformity and comparability. It will be appreciated that the normalization of the numerical data is performed using min-max scaling, z-score normalization and the like. The normalization of the numerical data is performed to eliminate biases caused by varying scales of the numerical data in the published data. The term *"unstructured data"* refers to data that lacks a predefined format or organization. In the context of the patent valuation, the unstructured data may include patent claims and descriptions written in natural language, legal status updates of the patents, copyrights and the like in free-text form, the citation reports with textual references and metadata, patent examiner notes or comments, and the like. The unstructured data is difficult to process directly using conventional algorithms, it requires preprocessing to extract meaningful insights from the unstructured data.

The term *"structured data"* refers to data that is organized into a predefined format, making it suitable for computational analysis. The structured data is derived from the unstructured data through preprocessing techniques such as Natural Language Processing (NLP), feature extraction, parsing and data normalization. Moreover, the NLP techniques may include algorithms such as tokenization, named entity recognition (NER), part-of-speech (POS) tagging, semantic embeddings, and the like. For example, tokenization can break down patent claims into individual words or phrases, while NER identify key entities such as assignees, inventors, or filing dates. Semantic embeddings can be used to represent the textual content of patent claims in a numerical format suitable for the predictive machine learning model. The NLP algorithms enable the preprocessing module to process the unstructured data and convert it into the structured data.

Moreover, the structured data may include metadata (such as patent number, filing data, assignee, design number and the like), numerical indicators (such as, the renewal fees, citation count and the like), categorical labels (such as, technology classification codes, litigation status (for example, infringement claims, cancellation requests) and the like). Herein, the term *"vector embeddings"* refers to numerical representations of the captured data, typically in the form of dense vectors. The vector embeddings are generated from the captured data to transform the captured data into a format that can be effectively processed by machine learning models. The vector embeddings are essential for representing complex relationships and patterns in the captured data. The term *"pre-trained language model"* refers to a language model that is trained on a large corpus of text data to understand and generate human language. For example, the pre-trained language model may include Bidirectional Encoder Representations from Transformers (BERT), A Lite BERT (ALBERT), Generative Pre-trained Transformer (GPT), Bidirectional and Auto-Regressive Transformers (BART), Word2Vec and the like. It will be appreciated that the pre-trained language model combines the BERT with domain specific ontologies for the preprocessing of the captured data. The pre-trained language model ensures that the vector embeddings accurately represent the semantic meaning of the captured data. The pre-trained language model provides the computational framework for generating the vector embeddings. The captured data often contain complex and technical language and generating the vector embeddings enables the system to capture the semantic meaning of the captured data. The pre-trained language model converts each text segment into a high-dimensional vector that captures its contextual meaning. A technical effect of the aforementioned feature to ensure that the machine learning valuation model understands complex terminologies and legal jargon. Additionally, the vector embedding enables the identification of relationships between different textual components, improving performance of downstream tasks like classification, clustering, and predictive modeling. Instead of working with high-dimensional raw text, the vector embeddings represent the essential information in a compact form, improving computational efficiency and performance in the automated valuation of the non-fungible asset.

It will be appreciated that the preprocessing is essential for ensuring that the published data is clean, consistent, and usable for the predictive machine learning valuation model. Additionally, the structured data and the normalized data enables accurate model training, improving valuation predictions. A technical effect of the aforementioned features is to reduce inconsistencies and noise in the dataset by organizing the unstructured data into a structured format. Additionally, impact of missing values is mitigated by identifying proxies or alternative parameters during the preprocessing of the published data, ensuring that the dataset remains reliable and suitable for training the predictive machine learning model. Accurate and well-processed data leads to precise valuation of the non-fungible asset, benefiting legal and financial stakeholders.

Throughout the present disclosure, the term *"pre-trained valuation model"* refers to a machine learning model that is trained on historical data to identify patterns, relationships, and dependencies between parameters associated with non-fungible assets. The pre-trained valuation model is used to identify the proxy for one or more parameters, including missing parameters, by leveraging its learned knowledge from the training phase. For example, the pre-trained valuation model may include supervised learning models, K-Means Clustering, Recurrent Neural Networks (RNNs), and the like.

Optionally, during a training of the predictive machine learning model, the proxy is iteratively recalculated by adjusting the one or more parameters until the proxy achieves the pre-set accuracy set by a pre-set fitting curve, wherein the pre-set fitting curve is derived from at least one of: a historical data, a domain-specific benchmark. In this regard, the term *"training"* refers to a process of developing the predictive machine learning model by iteratively adjusting the one or more parameters of the model to optimize its performance. The training involves feeding the predictive machine learning model with structured data, which includes the proxy and other relevant parameters, to enable the predictive machine learning model to learn patterns and relationships within the data. The term *"pre-set fitting curve"* refers to a predefined mathematical representation that defines the desired accuracy level for the predictive machine learning model during training. The pre-set fitting curve serves as a reference for evaluating the performance of the predictive machine learning model and determining whether the proxy has achieved the desired accuracy. The pre-set fitting curve is related to training because it is used during the training process to guide the iterative recalculation of the proxy by adjusting the one or more parameters. The term *"historical data"* refers to a previously collected and processed data that is relevant to the valuation of non-fungible assets. The historical data includes information such as past valuation trends, renewal fee patterns, performance metrics, and other parameters that have been used in similar predictive machine learning models. The historical data is used to derive the pre-set fitting curve. The term *"domain-specific benchmark"* refers to a set of standards or reference values that are specific to the domain of the non-fungible asset valuation. The domain-specific benchmark includes jurisdiction-specific valuation criteria, industry standards and the like. It will be appreciated that the recalculation is guided by the pre-set fitting curve. This involves adjusting the parameters of the proxy (e.g., weights assigned to features like grant lag, citation counts, or litigation history) until the model's predictions align with the pre-set accuracy defined by the fitting curve. For instance, if the initial proxy does not meet the accuracy threshold, the predictive machine learning model dynamically refines the proxy by incorporating additional data points or recalibrating the weights of existing parameters. This iterative process ensures that the model adapts to the specific characteristics of the non-fungible asset being valued, even in the presence of incomplete or noisy data. proxy recalculation process is implemented within the machine learning module, which interacts with the feature engineering module to extract relevant features and the performance evaluation module to validate the accuracy of the recalculated proxy. A technical effect of the aforementioned feature is to ensures that the proxy is adjusted to meet a predefined accuracy level. This iterative process reduces errors, enhances the generalization of the predictive machine learning model, and ensures that the valuation of non-fungible assets is both accurate and consistent.

Throughout the present disclosure, the term *"proxy"* refers to a substitute parameter or a combination of parameters that represent one or more missing parameters associated with the non-fungible asset. The proxy for the one or more parameters is derived from the pre-trained valuation model and serves as an approximation for the missing data, enabling the system to proceed with the valuation process even when certain parameters are unavailable. For example, if the renewal fee data for a patent is missing, the proxy may be derived from a combination of parameters such as grant lag, citation counts, and legal status. The term *"missing parameters"* refers to an absence of a feature, a data point or a value in the captured data from the data repository. For example, the missing parameter may include at least one missing feature such as grant lag, days published prior to issue, prediction, average claims word count, summary length and the like, in the case where the non-fungible asset is the patent. The missing parameter can occur in the numerical data, textual data, or other types of data within the captured data. The missing parameter can negatively impact the accuracy and reliability of the predictive machine learning valuation model. However, the computer-implemented method identifies and finds proxies for the one or more missing parameters. It will be appreciated that the handling of the one or more missing parameters involves identifying and addressing the missing parameter in the captured data. This can be achieved through various techniques such as statistical techniques (for example, Mean/Median/Mode imputation, last observation carried forward (LOCF), linear interpolation, hot deck imputation), machine learning-based decoding approaches (for example, k-Nearest Neighbors (KNN) Imputation, Regression Imputation, Random Forest Imputation), advanced deep learning methods (for example, Autoencoders, Generative Adversarial Networks (GANs), Matrix Factorization, Expectation-Maximization (EM) Algorithm), hybrid approaches and the like. The aforementioned techniques ensure that the missing values are either replaced with estimated values or handled in a way that prevents the underfitting of the data. The term *"pre-set confidence value"* a predefined threshold value that determines the accuracy and reliability of the proxy identified by the pre-trained valuation model. The pre-set confidence value ensures that the proxy meets a certain standard of accuracy before being used in the valuation process. For example, if the pre-set confidence value is 95%, the proxy for a missing parameter must have a predicted accuracy of at least 95% to be used in the valuation process. It will be appreciated that in real-world scenarios, datasets often have gaps or missing parameters, which can negatively impact the accuracy and reliability of the valuation process. By using the pre-trained valuation model to identify proxies, the system ensures that the valuation process remains robust and accurate, even in the absence of certain parameters. By using the pre-trained valuation model to identify the proxy, the system eliminates the need for manual intervention or assumptions about missing parameters. The ability to derive proxies from a combination of parameters or a single parameter ensures flexibility and adaptability in handling diverse datasets.

This approach prevents underfitting by enabling the predictive machine learning model to learn effectively even with incomplete data. The solution provided by the computer-implemented method is that the predictive machine learning model finds a proxy for the at least one missing parameter. This means that the pre-trained valuation model identifies a parameter or, in some cases, a combination of parameters that allow the calculation to be made with the accuracy (e.g., 84% for European patents and 94% for US patents), without the need for explicitly searching for or statistically imputing the missing value(s).

The proxy is determined based on a statistical analysis of historical data. In the first instance, the proxy is the same for every non-fungible asset of the same type. For example, when the non-fungible asset is a patent, the proxy is the same for every patent. Moreover, when the non-fungible asset is a trademark, the proxy is the same for every trademark. Alternatively, the computer-implemented method finds the proxy adaptively. In this case, the computer-implemented method determines the proxy based on both historical data and the information related to the specific non-fungible asset. For instance, in the case of patents, a classification system (for example, international patent classification (IPC), cooperative patent classification (CPC), custom classification system and the like) serves as a first proxy for the market, allowing each patent to be valued based on a combination of proxies derived from the historical valuation data and a mapping of values for each patent within that classification system. This adaptive approach ensures that even if many values are missing, the computer-implemented method is able to achieve a high confidence level (e.g., 84% for European patents and 94% for U.S. patents). This confidence level is a technical measurement of data fitting, achieved even when only basic information about the patent is available, provided there is a strong dataset from historical valuations of the classification system. Furthermore, the computer-implemented method incorporates ensemble learning algorithms, such as random forest and gradient boosting machines (GBM), which are particularly effective in reducing overfitting and improving generalization. By leveraging these techniques, the computer-implemented method achieves the technical effect of ensuring accurate and reliable automated valuation of the non-fungible assets, even in the presence of missing or incomplete data. Additionally, the technical effect is enhanced by the predictive machine learning model's ability to dynamically adapt to incomplete datasets, reducing computational inefficiencies and ensuring scalability for large-scale applications.

Optionally, the step of identifying the proxy for the one or more parameters associated with the non-fungible asset comprises:
identifying at least one relevant parameter from the structured output data;
reducing a dimensionality of the structured output data using at least one of: a principal component analysis, a t-distributed stochastic neighbour embedding (t-SNE); and
removing at least one irrelevant parameter based on the pre-set confidence value.

In this regard, the term *"relevant parameter"* refers to a parameter that has a meaningful, relevant, and significant impact on the valuation process and that contributes to the automated valuation of the non-fungible asset. The at least one relevant parameter is identified to ensure that the most important and contextually significant information is used for further processing of the structured output data. For example, renewal fee trends are one such parameter that is extracted from the structured output data. The likelihood of renewal fees being paid increases as the payment window approaches. For example, in Europe, renewal fees cannot be paid within the first nine months of a patent's grant. The method uses this restriction to predict the likelihood of renewal fees being paid as the payment window approaches. For instance, if the renewal fee is due in six months, the likelihood of payment increases as the threemonth window opens. The method uses this parameter as a principal component to assess the value of the non-fungible asset, as timely payment of renewal fees indicates the non-fungible asset's importance to the owner, thereby increasing the value of the non-fungible asset. In another example, if a non-fungible asset (such as a patent) faces infringement claims or cancellation requests, it indicates that the non-fungible asset holds significant value or is critical to a competitor's operations. The process of extracting the at least one parameter from the output data uses natural language processing (NLP) techniques such as Named Entity Recognition (NER), topic modelling, dependency parsing and the like. It will be appreciated that the at least one parameter allow the processor to compare the non-fungible assets effectively. By identifying the proxy from the one or more parameters, the processor gains a deeper understanding of the captured data, leading to accurate and reliable valuation prediction of the non-fungible asset. Moreover, the one or more parameters enables the processor to process large datasets of the captured data efficiently. The relevant parameter serves as the foundation for deriving the proxy, while the dimensionality reduction and removal of irrelevant parameters ensure that the proxy is derived from a simplified and meaningful dataset. Such events are considered the relevant parameters as these features positively influence the valuation of the non-fungible asset. The feature engineering module considers these events as principal components of the valuation process and incorporates them into the predictive machine learning model. The at least one relevant parameter is identified using at least one of: a random forest, a gradient boosting machine (GBM).

The term *"dimensionality"* refers to number of features or variables present in the structured output data. The dimensionality of the structured output data can be high due to the presence of numerous features, including both relevant and irrelevant parameters. High dimensionality can lead to increased computational complexity and reduced model performance. Moreover, the phrase *"reducing dimensionality"* refers to a process of decreasing the number of parameters in the structured output data while preserving the most important and relevant parameters. The dimensionality is reduced to improve a computational efficiency and enhance the performance of the predictive machine learning valuation model. The term *"principal component analysis"* refers to a statistical technique that is used for reducing the dimensionality by transforming the structured output data into a set of linearly uncorrelated components, known as principal components. The principal component analysis identifies directions of maximum variance in the structured output data and projects the structured output data onto these directions to reduce the number of parameters. This transformation of the structured output data ensures that the most significant patterns in the data are retained while eliminating redundant or less informative features. In the context of the valuation of non-fungible assets, such as patents, the principal component analysis (PCA) is used to reduce the complexity of high-dimensional datasets by identifying the at least one relevant parameter, such as renewal fee trends, litigation history, and citation counts. For example, PCA is able to combine correlated features, such as grant lag and days to issue, into a single principal component, thereby simplifying the dataset without losing critical information. This dimensionality reduction improves the efficiency and accuracy of the predictive machine learning model by reducing noise and computational overhead.

The term *"t-Distributed Stochastic Neighbor Embedding"* refers to a machine learning algorithm that is used for reducing the dimensionality of the structured output data by mapping high-dimensional data into a lower-dimensional space while preserving local structure and relationships between the data points. The t-SNE is particularly effective for visualizing high-dimensional data in two or three dimensions. The t-SNE helps in identifying and retaining the at least one relevant feature in the structured output data. The term *"irrelevant parameter"* refers to a parameter in the structured output data that fails to contribute meaningfully to the automated valuation of the non-fungible asset. For example, the at least one irrelevant parameter is removed by applying feature selection algorithms such as, mutual information, correlationbased filtering, recursive feature elimination and the like. For example, in the context of patent valuation, irrelevant parameters may include attributes such as the number of inventors, patent application formatting details, or filing office location, generality index, BERT-based whole patent vectors, number of inventors and IPC letter distribution, which may not have a direct or significant impact on the value of the patent. The pre-set confidence value is a predefined threshold that determines whether the one or more parameters are considered relevant or irrelevant. The parameters having a confidence value below the threshold are removed from the structured output data. In another example, if the patent is not granted then weightage of the features/parameters such as renewal fee payments, maintenance fee and the like is reduced, and such features are considered as the irrelevant parameters and are not included for the valuation of the patent. In this regard, the term *"non-valuable"* refers to non-fungible assets that are considered to have little or no commercial or technological value. The non-valuable patents are often identified based on specific indicators, such as the failure to pay renewal fees, lack of citations, or absence of licensing or litigation activity. For example, a patent that is abandoned due to non-payment of the first renewal fee is typically classified as a non-valuable patent. Such patents are unlikely to generate revenue or provide competitive advantages, making them less significant in the context of intellectual property management and valuation. The irrelevant parameter can introduce noise and reduce the performance of the predictive machine learning valuation model. For an example, the method avoids redundant readings from the data repository by using previously downloaded data unless real-time updates are required. It improves the computational operations and reduces the time required to perform the analysis. Moreover, after removing the noise, the predictive machine learning model converge faster during training, as the predictive machine learning model does not need to process the irrelevant feature or misleading data. For example, training time is reduced when the predictive machine learning model focuses only on relevant features like grant lag, citation trends, and litigation outcomes, by removing irrelevant features such as IPC letter distribution or overly general patent claims. Consequentially, by processing only relevant data, the system reduces the computational workload, leading to fewer CPU cycles required for training and inference. For example, a streamlined structured output data with fewer features requires less computation during matrix operations or gradient descent in the predictive machine learning algorithm. Additionally, with reduced CPU cycles and memory usage, the system consumes less energy, making it more environmentally friendly and cost-effective. For example, a noise-reduced structured output data allows the system to run efficiently on low-power devices or cloud infrastructure, reducing energy costs. Reduced computational and energy requirements translate into lower operational costs for running the system. For example, Cloud-based deployments of the system incur lower costs due to optimized resource usage. Furthermore, removing the at least one irrelevant parameter ensures that only the most important and relevant features are retained in the structured output data.

A technical effect of the aforementioned feature is to reduce complexity and noise in the structured output data that leads to a precise and reliable valuation outcome. Additionally, reducing the dimensionality of the structured output data ensures that the predictive machine learning valuation model can apply learned insights to unseen data without overfitting.

Optionally, the the step of executing the pre-trained valuation model to identify the proxy for one or more parameters comprises:
deriving the proxy from the combination of parameters or the single parameter using the random forest algorithm, wherein the random forest algorithm determines a relevance of the one or more parameters to prioritize at least one relevant parameter; and
ensuring that the proxy is validated against the pre-set confidence value by comparing the predicted accuracy with a threshold derived from at least one of: an out-of-bag (OOB) error of the random forest algorithm, at least one performance metrics.

In this regard, the random forest algorithm determines the relevance of the one or more parameters by analysing the degree of importance or contribution of the one or more parameters to the valuation process of the one-fungible asset. The relevance of the one or more parameters is used to prioritize the most relevant parameters. The random forest algorithm uses feature importance techniques such as Gini index, SHAP values, Recursive Feature Elimination (RFE), and the like to calculate the relevance of the one or more parameters. For example, the random forest algorithm may identify that a combination of the grant lag and the citation counts provides a reliable proxy for renewal fee data. The relevance of each parameter is assessed based on its contribution to the model's predictive accuracy, ensuring that only the most impactful parameters are used to derive the proxy. The relevant parameter refers to a parameter that has been identified as significant or impactful in the valuation process of the non-fungible asset. The relevant parameter is prioritized by the random forest algorithm based on the relevance of the one or more parameters. The relevant parameter is used in the derivation of the proxy, ensuring that the proxy is based on the most meaningful data points. The term *"threshold"* refers to a predefined value or limit used to validate the proxy against the pre-set confidence value. The threshold is used to compare the predicted accuracy of the proxy to ensure that the proxy meets the required confidence level. The term *"out-of-bag error"* refers to an accuracy metric that is used in the random forest algorithm to evaluate the performance of the predictive machine learning model on data that is not used during the training. The out-of-bag error provides an unbiased estimate of the model's predictive accuracy and is used to derive the threshold for validating the proxy. The out-of-bag error is technically related to the random forest algorithm, as the random forest algorithm generates the out-of-bag error by using a subset of data excluded from the training process for validation. The term *"performance metrics"* refers to a quantitative measure that is used to assess an accuracy, reliability, and effectiveness of the predictive machine learning valuation model. The performance metrics allows determining how well the model performs in estimating the value of the non-fungible asset based on input features and learned patterns. Moreover, the performance metrics are statistical indicators that helps in evaluation, comparison and optimization of the predictive machine learning valuation model. A technical effect of the aforementioned feature is to ensure that the proxy is derived from the most significant data points. The validation of the proxy against thresholds derived from the out-of-bag error and performance metrics ensures that the proxy meets the required confidence level, improving the robustness and reliability of the valuation process. It reduces the computational complexity and increases computational efficiency by reducing the operational time.

Optionally, the at least one performance metrics may include at least one of: a precision, a recall, an F1-score, an area under the curve-receiver operating characteristic (AUC-ROC), a confusion matrix. In this regard, the term *"precision"* refers to a performance metric that measures a proportion of true positive predictions out of all positive predictions made by the predictive machine learning valuation model. The precision evaluates an accuracy of the predictive machine learning valuation model in correctly identifying relevant instances, such as correctly valuing the non-fungible assets. The precision is one of the metrics used by the performance evaluation module to evaluate the predictive machine learning valuation model. The precision is essential for assessing the reliability of the model in scenarios where false positives can have significant consequences. The term *"recall"* refers to a performance metric that measures the proportion of true positive predictions out of all actual positive instances in the dataset. The recall evaluates the ability of the predictive machine learning valuation model to identify all relevant instances, such as ensuring that all valuable non-fungible assets are correctly identified. The term "*F1-score*" refers to a performance metric that represents a harmonic mean of the precision and the recall. The F1-score provides a balanced measure of the predictive machine learning valuation model's accuracy and completeness, particularly in scenarios where there is an imbalance between the precision and the recall. The F1-score is essential for evaluating the overall effectiveness of the predictive machine learning valuation model in identifying relevant instances while minimizing false positives and false negatives.

The term *"area under the curve-receiver operating characteristic (AUC-ROC)"* refers to a performance metric that measures an ability of the predictive machine learning valuation model to distinguish between positive and negative instances across different classification thresholds. The AUC-ROC evaluates the trade-off between the true positive rate (sensitivity) and the false positive rate (1-specificity) of the model. The AUC-ROC is essential for assessing the discriminatory power of the model, particularly in scenarios where the balance between sensitivity and specificity is required. In this regard, the term *"confusion matrix"* refers to a performance evaluation metric that is used to assess the accuracy and effectiveness of the predictive machine learning valuation model by comparing predicted outcomes with actual outcomes. The confusion matrix is a tabular representation that includes four key components such as, true positives, true negatives, false positives, and false negatives. The confusion matrix provides detailed insights into the performance of the predictive machine learning valuation model by highlighting the number of correct and incorrect predictions for each class. Moreover, the purpose of using the confusion matrix as the performance metrics may include granular performance analysis, class imbalance handling, precision vs. recall tradeoff, supports additional metrics calculation and the like. A technical effect of the aforementioned feature is to ensure that the confusion matrix enables the identification of potential issues such as misclassification errors or class imbalance. The matrix provides a quantifiable assessment of such issues.

A technical effect of the aforementioned feature is to ensure that the predictive machine learning valuation model is assessed for accuracy, completeness, balance, and discriminatory power. This evaluation enables the identification of strengths and weaknesses in the model's predictions, leading to improved reliability and robustness in the automated valuation of non-fungible assets. The use of these performance metrics enhances the system's ability to deliver accurate and actionable valuation results across diverse scenarios and datasets.

Throughout the present disclosure, the term *"predictive machine learning model"* refers to a computational model designed to estimate the value of the non-fungible asset based on historical data, the proxy, the one or more parameters, statistical patterns and the like. The predictive valuation model assigns a quantitative worth to the non-fungible asset based on legal, financial, and citation-based indicators. It will be appreciated that the predictive machine learning model determines which features (e.g., grant lag, renewal fee data, citation counts, litigation history, and semantic embeddings of claims) are most relevant for a given patent. The importance of each parameter is adjusted based on the available data. For example, in certain technology domains, citation counts may be weighted higher than litigation history, while in others, litigation history may play a more significant role. The term *"predictive valuation model"* refers to a machine learning model that is specifically designed to estimate the monetary value of a non-fungible asset. The predictive valuation model uses the structured output data and at least one proxy as input to analyze the relationships between various parameters and generate the valuation result. The predictive machine learning Models such as Gradient Boosting Machines (GBM), XGBoost, or deep learning architectures (e.g., artificial neural networks) can serve as the predictive valuation model and adjust valuation trends based on market shifts, jurisdictional differences, and patent-specific characteristics. Optionally, hedonic pricing models (HPMs) adaptively selects which variables (e.g., technology classification codes, oppositions during prosecution, or market adoption rates) best explain patent values in a given industry or jurisdiction. The HPMs model adjusts how much each factor influences the valuation based on real-time data, such as changes in licensing trends, or renewal fee payment patterns.

Optionally, the predictive machine learning model is at least one of: an ensemble learning algorithm, a support vector machine (SVM), a deep learning algorithm. In this regard, the term *"ensemble learning algorithm"* refers to a machine learning technique that combines multiple models to improve predictive performance of the predictive machine learning valuation model. Moreover, the ensemble learning algorithm combines multiple models that reduces errors, improves generalization and enhances reliability. For instance, in the valuation of patents, an ensemble learning algorithm is able to combine the outputs of decision trees trained on features like grant lag, citation counts, and litigation history to generate a more accurate valuation result. The ensemble learning algorithm is related to the structured data, as it uses the structured data as input. The term *"support vector machine (SVM)"* refers to a supervised learning algorithm that finds the optimal hyperplane to separate data points into different classes. The SVM is particularly effective for handling high-dimensional data and non-linear relationships. In this context, the SVM can be used to classify non-fungible assets as "valuable" or "not valuable" based on features like renewal fee trends, legal status, and semantic embeddings of patent claims. The SVM is related to the output data, as it uses the output data to identify patterns and relationships, and to the performance metrics, as the performance metrics are used to evaluate the accuracy of the SVM model. The term *"deep learning algorithm"* refers to a class of machine learning algorithms that use artificial neural networks with multiple layers to learn complex patterns in data. The deep learning algorithms, such as convolutional neural networks (CNNs) or recurrent neural networks (RNNs), are particularly effective for processing unstructured data, such as textual descriptions of patents or metadata associated with non-fungible assets. Herein, the deep learning algorithm can be used to extract one or more parameters from the output data and incorporate them into the valuation process. The deep learning algorithm is related to the preprocessing module, as the preprocessing module prepares the unstructured data for input into the deep learning algorithm, and to the feature engineering module, as the feature engineering module extracts the relevant parameters for the model. The predictive valuation model processes the one or more parameters, such as grant lag, renewal fee data, citation counts, prediction, technology classification codes, litigation history, renewal fee data and the like of the patent claims, to generate a valuation score or classification of the patent. The predictive valuation model is employed by the predictive machine learning model as a subset, where the valuation model is specifically tailored for the task of estimating the value of non-fungible assets such as the patent. The predictive valuation model is configured to process patent-specific data and provide an accurate valuation of the patent by using the ensemble learning algorithms such as random forest algorithm, gradient boosting machine (GBM) and the like. It will be appreciated that by allowing the predictive machine learning model to employ the predictive valuation model, the computer-implemented method is adapt to different types of data and computational requirements.. For example, reducing complexity of BERT embeddings or citation networks. In another example, the predictive machine learning model uses the artificial neural networks to combine features like grant lag, citation counts, and BERT embeddings to predict the value of the patent. A technical effect of this feature is to enable the predictive machine learning model to process complex and high-dimensional data, ensuring accurate predictions even in the presence of incomplete or noisy datasets. The deep learning algorithm is used for unsupervised learning and dimensionality reduction of the captured data.

Moreover, the predictive machine learning model is trainable and continuously learns from the upcoming data to improve its accuracy and reliability. It will be appreciated that the continuous learning ensures that the predictive machine learning model remains relevant and effective over time. The predictive valuation model uses the at least one parameter from the output data and the at least one proxy as an input to generate the valuation result of the non-fungible asset. The predictive machine learning model can handle complex, high-dimensional relationships between various attributes of the non-fungible asset. For example, a machine learning model that predicts a design's market value by analyzing citation trends, legal status, and technological impact.

Optionally, the ensemble learning algorithm comprises at least one of: a random forest algorithm, a gradient boosting machine (GBM). In this regard, the term *"random forest algorithm"* refers to a supervised ensemble learning technique that constructs multiple decision trees during training and combines their outputs to make a more accurate and robust prediction. The random forest algorithm operates by aggregating predictions of individual decision trees, either through averaging (for regression tasks) or majority voting (for classification tasks). It will be appreciated that the random forest algorithm uses Bagging (Bootstrap Aggregating) to reduce variance and improve stability. For example, if the method considers the legal status, the citation trends, and the renewal rates, each tree in the random forest algorithm analyzes different subsets of these features, and the final valuation is an aggregate decision from all trees. The term *"gradient boosting machine"* refers to an ensemble learning algorithm that builds a series of decision trees sequentially, where each subsequent decision tree corrects the errors of the previous decision tree. For example, the gradient boosting machine (GBM) may include XGBoost, LightGBM, CatBoost and the like. The gradient boosting machine (GBM) optimizes the predictive performance by minimizing a loss function through gradient descent. The gradient boosting machine (GBM) is particularly effective for handling complex relationships in the data and achieving high accuracy in predictions. A technical effect of the aforementioned feature is to ensure that the predictive machine learning valuation model can handle complex relationships in the structured output data, reduce overfitting, and achieve reliable automated valuation of the non-fungible assets. Additionally, the inclusion of the random forest algorithm and the gradient boosting machine (GBM) in the ensemble learning algorithm provides flexibility in selecting the most suitable technique for the specific characteristics of the captured data.

Throughout the present disclosure, the term *"valuation result"* refers to estimated value (e.g. monetary) of the non-fungible asset generated by the predictive valuation model. For example, the valuation result is expressed in a specific currency (such as, USD, EUR and the like) and represents the financial worth of the non-fungible asset based on the analysis of the structured output data and the at least one proxy. meet the predefined accuracy threshold to ensure its reliability. The term *"pre-set accuracy"* refers to a predefined threshold or a standard of accuracy that the predictive valuation model must achieve when generating the valuation result. The pre-set accuracy ensures that the valuation result meets a specific level of reliability and precision, making it suitable for decision-making. Typically, the pre-set accuracy is defined during the training and evaluation phases of the predictive valuation model. For example, if the pre-set accuracy is defined as 95%, the predictive valuation model must generate valuation results with an accuracy of at least 95% when compared to actual market values or ground truth data. The valuation result is displayed on the screen of the user device.

Optionally, the step of displaying the valuation result on the screen of the user device further comprises: encrypting the valuation result using at least one encryption method selected from: Advanced Encryption Standard (AES), Rivest-Shamir-Adleman (RSA), or Elliptic Curve Cryptography (ECC); and transmitting the encrypted valuation result to the user device, wherein the decryption of the valuation result is performed on the user device using a corresponding decryption method.

In this regard, the term "encryption" refers to the process of converting the valuation result into a secure, encoded format that can only be accessed by authorized parties. The encryption is performed using at least one encryption method selected from Advanced Encryption Standard (AES), Rivest-Shamir-Adleman (RSA), or Elliptic Curve Cryptography (ECC). The term *"Advanced Encryption Standard (AES)"* refers to a symmetric encryption algorithm that uses the same key for encryption and decryption, providing high-speed and secure data protection. The term *"Rivest-Shamir-Adleman (RSA)"* is an asymmetric encryption algorithm that uses a pair of public and private keys for secure communication. The term *"Elliptic Curve Cryptography (ECC)"* is another asymmetric encryption method that provides equivalent security to RSA but with smaller key sizes, making it more efficient for resourceconstrained devices. It will be appreciated that the encryption of the valuation result ensures that the data remains secure during transmission over the computing network. The encryption process is implemented within the computing node, which includes an encryption module that applies the selected encryption method to the valuation result. The term *"transmitting"* refers to a process of sending the encrypted valuation result from the computing node to the user device via the computing network. The transmission ensures that the valuation result reaches the intended recipient without being intercepted or tampered with. The transmission process is enabled by the communication interface of the computing node, which ensures secure data transfer over the network. The term *"decryption"* refers to a process of converting the encrypted valuation result of the non-fungible asset back into its original, readable format on the user device. The decryption is performed using a corresponding decryption method that matches the encryption method used. For example, if the valuation result is encrypted using AES, the same key is used to decrypt the data on the user device. If RSA or ECC is used, the private key corresponding to the public key used for encryption is required for decryption. The decryption process is implemented on the user device, which includes a decryption module that uses the corresponding decryption method to decode the encrypted valuation result. A technical effect of the aforementioned feature is to ensure confidentiality, integrity, and security of the data during the transmission. The encrypted data prevents unauthorized access, interception, or tampering with the valuation result, thereby enhancing the reliability and trustworthiness of the computer-implemented method.

Optionally, the computer-implemented method further comprises generating a hash for at least one of: the input data, the output data, using at least one hash generation algorithm. In this regard, the term *"hash"* refers to a fixed-size, alphanumeric string of characters, and a unique digital fingerprint generated by applying a specific mathematical algorithm known as the hashing algorithm, to the input data and/or the generated valuation result. The term *"hashing algorithm"* refers to a computational method that transforms the input data and/or the generated valuation result into the hash value, ensuring that even a minor change in the data results in a completely different hash value. The at least one hashing algorithm may include SHA-256, MD5, Blake2, zeroknowledge proof-based algorithm and the like is used to perform the hashing. The hash functions are designed to take an arbitrary amount of data (input) and produce a unique, fixed-length output, which appears as a seemingly random sequence of characters. It will be appreciated that the application of the hash to the input data ensures that any changes or updates to the dynamically updated parameters (e.g., patent records) can be detected efficiently. By comparing the hash of the current input data with a previously stored hash value, the system can determine whether the input data has been modified without the need to re-read or reprocess the entire dataset. This approach significantly reduces computational overhead, especially when dealing with large datasets containing millions of records. Similarly, the application of the hash to the valuation result ensures that the preprocessed data remains consistent and free from errors. The hash value of the valuation result is used to verify that the data has been cleaned and preprocessed correctly, ensuring the reliability of the valuation result.

Additionally, the hash serves as a verification mechanism, enabling the system to detect changes in the input data and ensure the consistency of the valuation result. The hash value is stored in a secure location and compared with subsequent hash values to identify updates or inconsistencies. If a mismatch is detected, the system generates an alert, which is processed by the host node and displayed on the user device. This alert informs the user that the valuation result may have changed due to updates in the input data. This mechanism allows the system to efficiently detect updates in the published data (e.g., in a remote database) without the need to read and apply algorithms to compare every piece of data. This capability represents significant savings in computational power and processing time, especially when dealing with millions of records. Furthermore, hashing the input data and the valuation result provides an additional layer of trust and transparency. By storing the hash values of the input data and the valuation result, external third parties can independently verify that the valuation has been calculated by the system without requiring disclosure of the underlying algorithm. This ensures that the valuation process remains secure while increasing trust in the system. A technical effect of the aforementioned feature is to ensure that it reduces computational overhead and saves processing time. Additionally, hashing the data allows external third parties to independently verify, validate, or check for updates on the valuation results without requiring access to the underlying algorithm or calculations performed by the system. If the hash values remain unchanged, the valuation results will also remain the same. For example, in the context of patents, where time is measured in days or years (e.g., for renewals), the hash value will change if the patent year changes, such as from the 4th year to the 5th year after grant. This enables a fully automated check of the valuation results or even an automated re-valuation based on the same original input. The user device may issue recurring requests for re-valuation based on time intervals or alerts generated by the system. This process involves automated communication between computing nodes, triggering data harvesting, calculations, verifications, and updates, which result in changes (e.g., an alert or updated data) on at least the user device's memory and the screen.

The present disclosure also relates to the system as described above. Various embodiments and variants disclosed above, with respect to the aforementioned method.

Throughout the present disclosure, the term *"processor"* refers to a computational element that is operable to execute the software framework. Examples of the processor may include, but are not limited to, a microprocessor, a microcontroller, a complex instruction set computing (CISC) microprocessor, a reduced instruction set computing (RISC) microprocessor, a very long instruction word (VLIW) microprocessor, or any other type of processing circuit. The processor is configured to interact with various modules, including the data capture module, the preprocessing module, the feature engineering module, the machine learning module, and the performance evaluation module, to perform specific tasks. The processor is essential for coordinating the flow of data and ensuring that each module operates in sequence to achieve the automated valuation of the non-fungible asset.

Throughout the present disclosure, the term *"data capture module"* refers to a functional component of the processor that is configured to capture the published data from the data repository. The data capture module ensures that the published data is retrieved in the structured format for subsequent processing. The data capture module is essential for initiating the automated valuation process by providing the input data required for the downstream modules. The data capture module is also related to the data repository, as the data capture module interacts with the data repository to retrieve the published data.

Throughout the present disclosure, the term *"preprocessing module"* refers to a functional component of the processor that is configured to preprocess the captured data for normalization using at least one natural language processing (NLP) technique.

The preprocessing module performs tasks such as handling missing values, ensuring that the published data is prepared in a format suitable for feature extraction and machine learning. Moreover, the process of handling the missing values can be compared to decoding methods, such as mean or median imputation, k-nearest neighbors (KNN) imputation, matrix factorization, expectation-maximization (EM), or deep learning-based approaches like autoencoders. These decoding techniques aim to reconstruct incomplete datasets, and similarly, the preprocessing module ensures that missing data does not hinder the downstream processes. By preparing the data in this manner, the preprocessing module achieves the technical effect of enabling accurate and reliable feature extraction in the feature engineering module, which uses the structured output data to extract semantic features. The preprocessing module ensures that the published data is prepared in a format suitable for feature extraction and machine learning. The preprocessing module is related to the feature engineering module, as the structured output data is passed to the feature engineering module for the extraction of semantic features.

Throughout the present disclosure, the term *"feature engineering module"* refers to a functional component of the processor that is configured to extract at least one semantic feature from the structured output data. The feature engineering module identifies relevant parameters, reduces dimensionality, and removes irrelevant features to ensure that only meaningful information is retained. The term *"machine learning module"* refers to a functional component of the processor that is configured to develop the predictive machine learning valuation model using the ensemble learning algorithm. The machine learning module uses the semantic features extracted by the feature engineering module as input to train the predictive machine learning valuation model. The machine learning module is essential for generating predictions related to the valuation of the non-fungible asset.

Throughout the present disclosure, the term *"performance evaluation module"* refers to a functional component of the processor that is configured to evaluate the predictive machine learning valuation model using the at least one performance metrics. The performance evaluation module ensures that the predictive machine learning valuation model meets the required accuracy and reliability standards for the automated valuation of the non-fungible asset. The performance evaluation module is essential for validating the effectiveness of the machine learning module and identifying areas for improvement. For example, the system uses the data stored in the data repository and previously calculated results to provide a preliminary valuation of the non-fungible asset. However, if required, the system performs a real-time analysis by accessing the updated data from the database. This two-step process ensures efficient and accurate valuation.

Optionally, the processor is further configured to:
identify at least one relevant parameter from the structured output data;
reduce a dimensionality of the structured output data using at least one of: a principal component analysis, a t-distributed stochastic neighbor embedding (t-SNE); and
remove at least one irrelevant parameter based on the pre-set confidence value.

Optionally, the processor is further configured to update the predictive machine learning valuation model based on an upcoming data. In this regard, the term *"upcoming data"* refers to a new or additional data that becomes available after the initial training and deployment of the predictive machine learning valuation model. The system dynamically adapts based on features such as time periods, data updates, data repository, litigation status, infringement, renewal fee and the like. For example, the upcoming data may include updated published data, such as new patent claims, legal status changes, renewal fees data, or citation reports, new designs, status change of the copyrights, change of ownership of an art piece, litigation, infringement and the like which are relevant to the automated valuation of the non-fungible asset. The system avoids redundant readings of the data repository by using previously downloaded data unless real-time updates are required. The term *"update"* refers to a process of modifying or improving the predictive machine learning valuation model by incorporating the upcoming data. The upcoming data serves as the input for retraining or fine-tuning the predictive machine learning valuation model. The system uses historical data and existing data to analyze features or parameters, and predict valuation trends. For example, for a granted patent, one parameter is the status of the renewal fee depending on the time period. The system analyses the renewal fees only and it does not need to re-read the patent from the data repository. Optionally, Bayesian updating in the predictive machine learning model updates patent valuation predictions as new data becomes available. For example, if a new licensing deal or litigation outcome deviates from prior predictions, the model adjusts future estimates accordingly. The Bayesian updating ensures that the valuation model remains accurate and relevant by incorporating the latest market and legal data. The invention thus ensures that the predictive machine learning valuation model remains accurate, relevant, and effective over time by incorporating the upcoming data. By updating the predictive machine learning valuation model based on the upcoming data, the system adapts to changes in the data and improves its ability to provide reliable automated valuations of non-fungible assets.

Moreover, the system of the present invention, and the associated computer-implemented method, addresses the problem of providing accurate valuation data to the user in situations where one or more databases or data repositories accessed by the system contain dynamically modified data. By accurate valuation, the accuracy is pre-set by a pre-trained valuation model, which is trained on a significant portion or even the entirety of available patent data harvested from one or more specific databases associated with a particular jurisdiction.

The valuation data is, at least in part, calculated at a computing node that is remote from the at least one database or data repository and is subsequently provided on the screen of a user device, which is a separate device. For example, the calculated valuation results may be displayed on the screen of a mobile phone, tablet, laptop, or desktop computer, independent of the user's location, provided that the user device is connected to the network.

The present invention solves a problem of enabling known single or dualprocessor computing devices to perform the computer-implemented method of the present invention. This is achieved by utilizing a pre-trained valuation model, which eliminates the need for the device to retrain the model or redefine it when encountering a missing parameter that was originally expected as a data input for the valuation. Instead, the system or method calculates a proxy that represents the missing parameter, allowing the valuation results to be provided with at least the same accuracy (i.e., confidence level, as defined by the area under the curve described elsewhere in this document).

The method further allows the device to efficiently utilize its computing power by preventing overfitting and/or underfitting of the model data. By avoiding overfitting or underfitting, the system reduces the computational power, memory, and processing resources required to perform the valuation. This ensures that the system can operate effectively even on devices with limited computational capabilities.

In situations where the data repository is accessed by the system contains millions of records, such as when providing a valuation of a patent in Europe (e.g., granted under the European Patent Convention), the system is configured to dynamically adapt to the available data, to calculate one or more proxies for any missing parameters, and provides valuation results with a pre-set accuracy, making it suitable applications accessing large datasets.

The present disclosure also relates to the non-transitory computerreadable storage medium as described above.

### DETAILED DESCRIPTION OF THE DRAWINGS

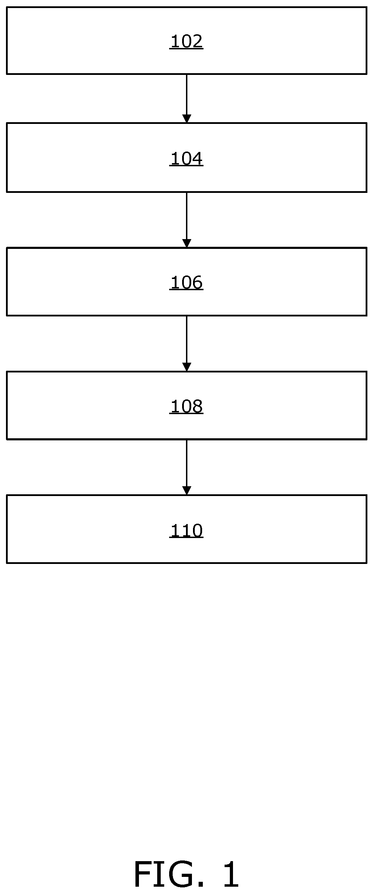

Referring to FIG. 1, illustrated is an illustration of a flow chart of steps of a computer-implemented method for an automated valuation of a non-fungible asset, in accordance with an embodiment of the present disclosure. As shown, at step **102,** an input data associated with the non-fungible asset is received from a user device, wherein the input data comprises a first set of parameters comprising at least one parameter that is a unique identifier of the non-fungible asset. At step **104,** the published data is captured from the data repository, wherein the published data comprises a second set of parameters associated with the non-fungible asset. The captured data is optionally partially or fully stored at a data repository. At step **106,** the captured data is preprocessed for normalization of the published data, using at least one multi-dimensional vector-based model to generate an output data that is structured. At step **108,** a pre-trained valuation model is executed to identify a proxy for one or more parameters associated with the non-fungible asset, including but not limited to one or more parameters that are missing from the captured data, wherein the proxy is derived from a combination of parameters or from a single parameter provided that the proxy is derived with a pre-set confidence value. At step **110,** a predictive machine learning valuation model is applied by executing a predictive valuation model using the output data using at least the proxy as input, to generate valuation result for the non-fungible asset with a pre-set accuracy and display the valuation result at the screen of the user device, thereby performing the automated valuation of the non-fungible asset.

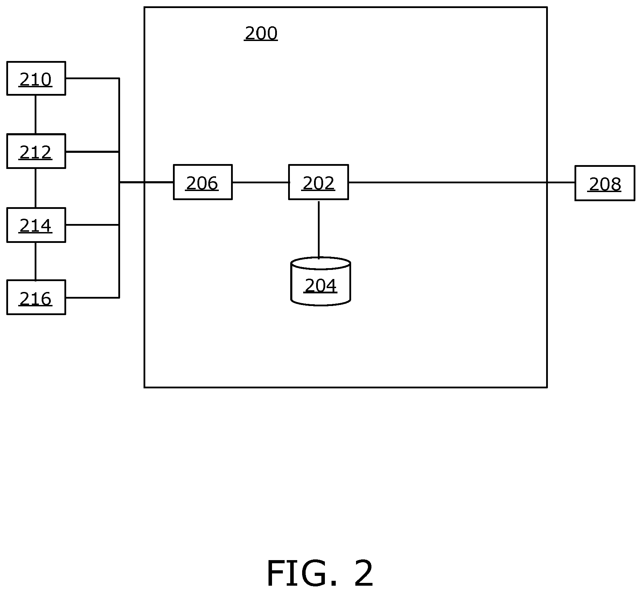

Referring to FIG. 2, illustrated is an illustration of a block diagram of a system **200** for an automated valuation of a non-fungible asset, in accordance with an embodiment of the present disclosure. The system **200** comprises at least one node computing node **202,** and a data repository **204** configured to, optionally, store a portion or the totality of published data in a structured format. Optionally, the data repository **204** is part of the same computing device as at least one node computing node **202.** Storing a portion or the totality of the data capture in a data repository which is part of the system, allows the calculations and communications comprised in the method of the present invention to occur at higher speeds when there is a delay in the process caused at the step of capturing the data, for example a delay cause by one or more public registries which are the sources of published data. In the presence of such a delay, the system is configured to capture the data from the data repository **204** when the delay is larger than a pre-defined threshold (i.e. if t> threshold, then capture data from data repository). If data is captured from the data repository **204,** a message may be automatically generated and displayed in the user device containing the date in which the data used by the system for the calculation of the asset value stored.

Each computing node comprises a processer **206** that is communicably coupled to the data repository **204** and at least one user device **208.** The processor **206** is configured to receive from a user device input data associated with the non-fungible asset, comprises a first set of parameters comprising at least one parameter that is a unique identifier of the non-fungible asset. The processor **206** is configured to capture data from one or more data sources of published data or, optionally, from the data repository **204,** wherein the published data comprises a second set of parameters associated with the non-fungible asset. Furthermore, the processor **206** is configured to preprocess the captured data for normalization of the published data, using at least one multi-dimensional vector-based model **210** to generate an output data that is structured.

When the output data generated from data stored at the data repository, if a hash value is available, the system is configured to compare, using any suitable algorithm, the hash values of the previously captured data (i.e. a first hash value) associated with a given non-fungible asset with the hash value of the data published (i.e. a second hash value) at least one data source associated with a given non-fungible asset. In this situation, if the first and second hash values are equal, the system is configured to proceed to the next step wherein the processor **206** is configured to execute a pre-trained valuation model **212.** If there is a difference between these two hash values, the system, before proceeding to the subsequent step to execute the pre-trained valuation model, may be configured re-run the method steps associated with generating the output data until two equal hash values are calculated from 2 subsequent steps of capturing the data from the at least one source of published data. The system may also be configured to proceed to generate the final results including a message on the user device interface (e.g. the screen) showing the data in which the data was last captured from the published data and stored in the data repository.

Such a comparison step eliminates the need of downloading and storing new data associated with the asset, thus resulting gin lower use of computer memory, network bandwidth and especially, making the same computing system operate faster more computationally efficient when there is a requirement of downloading a full set of data. This situation becomes critical, and the technical effect more prominent, when the non-fungible asset is a patent (or a patent application) because there are currently approximately two hundred million sets of published data associated with a unique identifier (e.g. a patent number) of each patent or patent application record, each of these sets of data containing a plurality of numbers and documents identifying parameters (well-known to a person versed in legal aspects associated with a patent or patent application) making any mathematical calculations such as softwarebased patent document searching computationally intensive.

Furthermore, the processor **206** is configured to execute a pre-trained valuation model **212** to identify a proxy for one or more parameters associated with the non-fungible asset, including but not limited to one or more parameters that are missing from the captured data, wherein the proxy is derived from a combination of parameters or from a single parameter provided that the proxy is derived with a pre-set confidence value. Furthermore, the processor **206** is configured to apply a predictive machine learning model by executing a predictive valuation model **214** using the output data using at least the proxy as input, to generate valuation result for the non-fungible asset with a pre-set accuracy and display the valuation result at the screen of the user device, thereby performing the automated valuation of the non-fungible asset. Optionally, the processor **206** is configured to generate vector embeddings for the captured data, using a pre-trained model **216.**

### EXPERIMENTAL PART

In an example, the aforementioned computer-implemented method and system is designed to determine the value of patents using a structured, data-driven approach that incorporates advanced machine learning techniques. The system may be configured to use ensemble learning algorithms, specifically Gradient Boosting Machines (GBM) and Random Forest algorithms, to analyze various patent-related factors, including litigation history, renewal rates, and semantic features derived from patent claims. The model has been trained and tested on extensive datasets, including the Stanford NPE Litigation Database and the USPTO PatentsView Dataset, to ensure reliability, robustness, and scalability.

Litigation data and non-valuable patents were utilized as the training dataset. The feasibility of the approach was confirmed with a GBM model, achieving an Area Under the Curve-Receiver Operating Characteristic (AUC-ROC) of 0.94. Among the tested features, grant lag was identified as the most significant predictor, followed by days published prior to issue and BERT-generated vector features derived from patent claims. A refined vector embedding feature based on the "multi-qa-distilbert" model was also integrated, alongside additional factors such as average claim word count and summary length.

The iterative model development process began with a logistic regression model on grant lag, followed by improvements using Random Forest models, and culminating in a Gradient Boosting Machine (GBM). The GBM model was selected as the final model due to its superior performance on unseen data, delivering an AUC-ROC score of 0.939.

The dataset was divided into 70% training, 20% testing, and 10% holdout sets, with the best model on the holdout set being the Gradient Boosting Machine. Given an overall AUC-ROC score exceeding 0.9, the technical feasibility of an AI-driven patent valuation system has been successfully demonstrated.

Utilising the Stanford Non Practicing Entity (NPE) Litigation Database alongside the USPTO PatentsView Dataset, the project effectively integrated substantial datasets for detailed patent analysis. Advanced machine learning models, specifically Gradient Boosting Machines and Random Forest algorithms, were deployed to discern patterns within complex patent data. These models were tasked with classifying patents as either "Valuable" or "Not valuable," using factors such as litigation history and renewal rates as indicators.

The resulting system demonstrated high accuracy in predicting binary patent value (valuable/not valuable) as measured by a confusion matrix and the area under the receiver operator characteristic curve for a binary classifier. This confirms the technical feasibility and practical potential of AI methods for patent valuation.

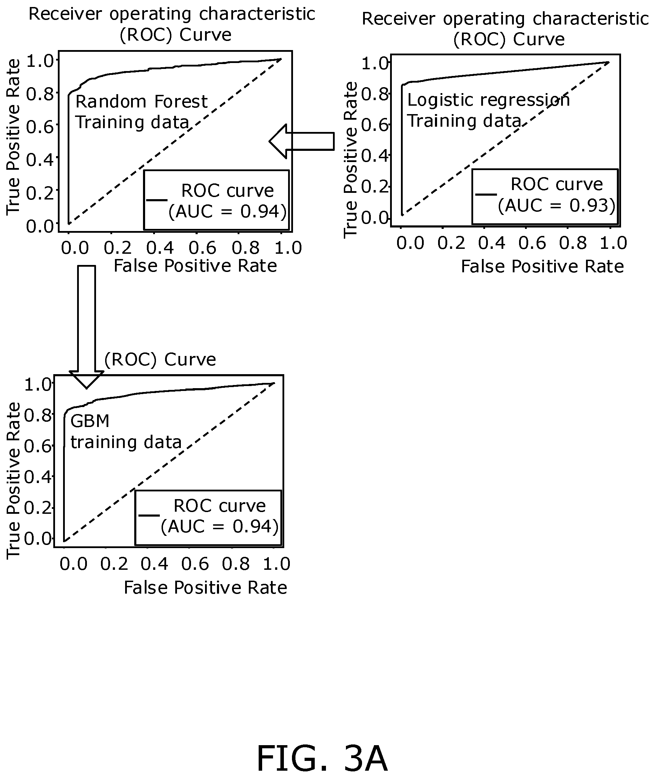

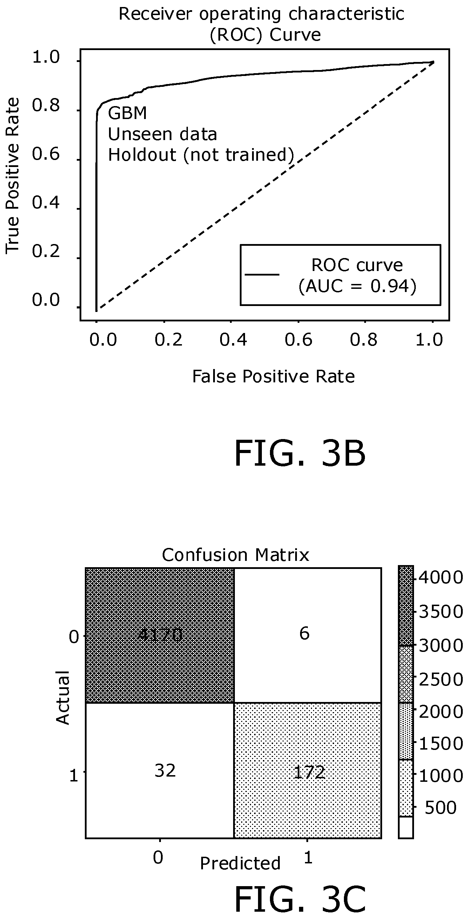

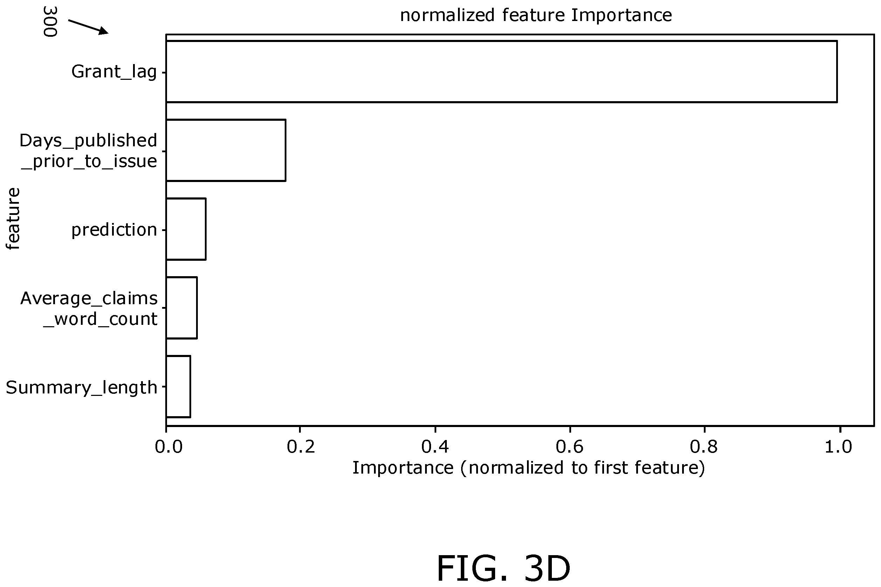

An experimental part is explained in FIGs. 3A, 3B, 3C and 3D.

Referring to FIG. 3A, illustrated is a graphical representation of an AUC-ROC curve (Area Under the Receiver Operating Characteristic Curve) for an iterative predictive machine learning model, in accordance with an embodiment of the present disclosure. As shown, the x-axis represents the false positive rate, and y-axis represents the true positive rate of AUC-ROC curve. A false positive occurs when the predictive machine learning model predicts that a patent is "valuable" (positive class) when, in reality, it is "not valuable" (negative class). The false positive rate is a proportion of all actual "not valuable" patents that are incorrectly classified as "valuable" by the predictive machine learning model. The false positive rate is critical in evaluating the performance of the predictive machine learning model, especially in the context of patent valuation. A high false positive rate would mean that the model frequently overestimates the value of patents, which could lead to incorrect business decisions, such as overpaying for licensing or investing in low-value patents. A lower false positive rate, combined with a high true positive rate, indicates a better-performing model. The iterative predictive machine learning model improvement started with a logistic regression model on a grant lag. The logistic regression model demonstrates accuracy on the training data. Thereafter, a random forest model is employed on the training data. The random forest model marginally increases accuracy. Thereafter, a graph or visual representation of the AUC-ROC curve (Area Under the Receiver Operating Characteristic Curve) for the Gradient Boosting Machine (GBM) model is shown. The graph demonstrates the performance of the GBM model in classifying patents as "valuable" or "not valuable." The AUC-ROC curve provides a visual representation of the trade-off between the true positive rate (sensitivity) and the false positive rate (1-specificity). The high AUC value of 0.94 confirms the feasibility of using the GBM model for patent valuation.

Referring to FIG. 3B, illustrated is a graphical representation of an AUC-ROC curve (Area Under the Receiver Operating Characteristic Curve) for a Gradient Boosting Machine (GBM) model with untrained data, in accordance with an embodiment of the present disclosure. As shown, the AUC-ROC curve provides a visual representation of the trade-off between the true positive rate (sensitivity) along y-axis and the false positive rate (1-specificity) along x-axis. The graphical representation demonstrates the ability of the Gradient Boosting Machine to maintain high accuracy on unseen data. The low false positive rate, as indicated by the high AUC-ROC value (e.g., 0.94), demonstrates that the model is effective at minimizing such errors, ensuring reliable patent valuation.

Referring to FIG. 3C, illustrated is a confusion matrix, in accordance with an embodiment of the present disclosure. As shown, the confusion matrix is a 2x2 table that summarizes the outcomes of the classification model. The confusion matrix consists of true positives (i.e., the number of patents correctly classified as "valuable"), true negatives (i.e., the number of patents correctly classified as "not valuable"), false positive (i.e., the number of patents incorrectly classified as "valuable") also referred as a Type 1 error, false negatives (e.g., the number of patents incorrectly classified as "not valuable") as referred as a type 2 error. The confusion matrix illustrates the performance of the predictive machine learning model, such as the Gradient Boosting Machine, in classifying patents. The confusion matrix also serves as the basis for calculating the AUC-ROC curve, which evaluates the trade-off between the true positive rate (sensitivity) and the false positive rate (1-specificity) at various classification thresholds. The high AUC value (e.g., 0.94) depicted in the drawings confirms the model's ability to distinguish between "valuable" and "not valuable" patents with high accuracy.

Referring to FIG. 3D, illustrated is a horizontal bar chart **300** representing relative importance of various features in a predictive machine learning model, in accordance with an embodiment of the present disclosure. As shown, the horizontal bar chart **300** represents the contribution of each semantic feature to the valuation process of the predictive machine learning model. The x-axis denotes feature importance in the valuation process, normalized to the most influential feature, while the y-axis denotes the features used in the predictive machine learning model. The x-axis represents the relative importance of each feature in the predictive machine learning model. The values are normalized, meaning the most significant feature is assigned a value of 1 (namely grant lag), and other features (namely days published prior to issue, prediction, average claims word count, summary length) are scaled accordingly. The grant lag has the highest importance, significantly outweighing other features. This indicates that the time taken for a patent to be granted is a crucial factor in determining its valuation. The prediction, average claims word count, and summary length have lower importance values, indicating a lesser impact on the model's valuation outcomes.

## Claims

1. A computer-implemented method for an automated valuation of a non-fungible asset is performed by at least one computing node (202), and wherein each computing node (202) is communicably coupled to at least one user device (208) and at least one data repository (204) wherein the computing nodes, the data repository and the user device are connected via a computing network, the method comprising:
receiving from a user device input data associated with the non-fungible asset, wherein the input data comprises a first set of parameters comprising at least one parameter that is a unique identifier of the non-fungible asset;
capturing published data from one or more sources of published data, and optionally storing at least a portion of the captured in the data repository (204), wherein the published data comprises a second set of parameters associated with the non-fungible asset;
preprocessing the captured data for normalization of the published data, using at least one multi-dimensional vector-based model (210) to generate an output data that is structured;
executing a pre-trained valuation model (212) to identify a proxy for one or more parameters associated with the non-fungible asset, including but not limited to one or more parameters that are missing from the captured data, wherein the proxy is derived from a combination of parameters or from a single parameter provided that the proxy is derived with a pre-set confidence value; and
applying a predictive machine learning model by executing a predictive valuation model (214) using the output data using at least the proxy as input, to generate valuation result for the non-fungible asset with a pre-set accuracy and display the valuation result at the screen of the user device, thereby performing the automated valuation of the non-fungible asset.

2. A computer-implemented method according to claim 1, wherein the published data comprises at least one of: patent claims, legal status data, renewal data, citation reports, metadata associated with the non-fungible asset.

3. A computer-implemented method according to any of the preceding claims, wherein the step of preprocessing the captured data comprises at least one of: normalizing a numerical data, handling the at least one missing value, converting an unstructured data into a structured data, generating vector embeddings for the captured data using a pre-trained language model (216), in the captured data.

4. A computer-implemented method according to any of the preceding claims, wherein the step of identifying the proxy for one or more parameters associated with the non-fungible asset comprises:
identifying at least one relevant parameter from the structured output data;
reducing a dimensionality of the structured output data using at least one of: a principal component analysis, a t-distributed stochastic neighbor embedding (t-SNE); and
removing at least one irrelevant parameter based on the pre-set confidence value.

5. A computer-implemented method according to any of the preceding claims, wherein during a training of the predictive machine learning model, the proxy is iteratively recalculated by adjusting the one or more parameters until the proxy achieves the pre-set accuracy set by a pre-set fitting curve, wherein the pre-set fitting curve is derived from at least one of: a historical data, a domain-specific benchmark.

6. A computer-implemented method according to any of the preceding claims, wherein the predictive machine learning model is at least one of: an ensemble learning algorithm, a support vector machine (SVM), a deep learning algorithm.

7. A computer- implemented method according to any of the preceding claims, wherein the ensemble learning algorithm comprises at least one of: a random forest algorithm, a gradient boosting machine (GBM).

8. A computer-implemented method according to any of the preceding claims, wherein the step of executing the pre-trained valuation model (212) to identify the proxy for one or more parameters comprises:
deriving the proxy from the combination of parameters or the single parameter using the random forest algorithm, wherein the random forest algorithm determines a relevance of the one or more parameters to prioritize at least one relevant parameter; and
ensuring that the proxy is validated against the pre-set confidence value by comparing the predicted accuracy with a threshold derived from at least one of: an out-of-bag (OOB) error of the random forest algorithm, at least one performance metrics.

9. A computer-implemented method according to claim 8, wherein the at least one performance metrics may include at least one of: a precision, a recall, an F1-score, an area under the curve-receiver operating characteristic (AUC-ROC), a confusion matrix.

10. A computer-implemented method according to any of the preceding claims, wherein the step of displaying the valuation result on the screen of the user device (208) further comprises:
encrypting the valuation result using at least one encryption method selected from: Advanced Encryption Standard (AES), Rivest-Shamir-Adleman (RSA), or Elliptic Curve Cryptography (ECC); and
transmitting the encrypted valuation result to the user device, wherein the decryption of the valuation result is performed on the user device using a corresponding decryption method.

11. A computer-implemented method according to any of the preceding claims, further comprising generating a hash for at least one of: the input data, the output data, using at least one hash generation algorithm.

12. A system (200) for an automated valuation of a non-fungible asset, the system comprising a plurality of computing nodes (202), and a data repository (204) configured to store at least a portion of a published data in a structured format, wherein each computing node comprises a processor (206) that is communicably coupled to the data repository and to at least one user device (208) via a computing network, wherein the processor is configured to:
receive from a user device input data associated with the non-fungible asset, wherein the input data comprises a first set of parameters comprising at least one parameter that is a unique identifier of the non-fungible asset;
capture a published data from the data repository wherein the published data comprises a second set of parameters associated with the non-fungible asset;
preprocess the captured data for normalization of the published data, using at least one multi-dimensional vector-based model (210) to generate an output data that is structured;
execute a pre-trained valuation model (212) to identify a proxy for one or more parameters associated with the non-fungible asset, including but not limited to one or more parameters that are missing from the captured data, wherein the proxy is derived from a combination of parameters or from a single parameter provided that the proxy is derived with a pre-set confidence value; and
apply a predictive machine learning model by executing a predictive valuation model (214) using the output data and the at least the proxy as input, to generate valuation result for a non-fungible asset with a pre-set accuracy and display the valuation result at the screen of the user device, thereby performing the automated valuation of the non-fungible asset.

13. A system (200) according to claim 12, wherein the processor (206) is further configured to:
identify at least one relevant parameter from the structured output data;
reduce a dimensionality of the structured output data using at least one of: a principal component analysis, a t-distributed stochastic neighbor embedding (t-SNE); and
remove at least one irrelevant parameter based on the pre-set confidence value.

14. A system (200) according to claims 12-13, wherein the processor (206) is further configured to update the predictive machine learning model based on an upcoming data.
